# FASCICULE DE BREVET EUROPEEN

(11) **EP 2 319 375 B1**
(45) Date de publication et mention de la délivrance du brevet: **04.07.2012**
(21) Numéro de dépôt: 10178827.1
(22) Date de dépôt: 19.05.2008
(51) Int. Cl.: A47J 31/36, A47J 31/40

(54) **Système de production de boissons par infusion**
System zur Herstellung von Aufgussgetränken
System for producing beverages by infusion

(30) Priorité: 21.05.2007 FR 0755149
(43) Date de publication de la demande: 11.05.2011
(62) Demande divisionnaire de: 08759728.2
(73) Titulaire: COMPAGNIE MEDITERRANEENNE DES CAFES S.A., 06510 Carros (FR)
(72) Inventeur: Blanc, Jean-Pierre, 06000, NICE (FR); Goering, Alain, 06000, NICE (FR)
(74) Mandataire: Hautier, Nicolas

(56) Documents cités:
- EP-A- 0 867 142
- WO-A-00/38558
- FR-A- 2 713 905
- FR-A- 2 745 995

## Description

La présente invention concerne un dispositif de production de boissons par infusion d'un produit contenu dans un conditionnement.

Elle trouve plus particulièrement son application dans le domaine des machines à café de type ESPRESSO. Elle pourra également s'appliquer à la production de boissons à partir d'autres matières telles que le thé.

De nombreuses machines à café utilisent désormais des conditionnements unitaires et jetables de café moulu. L'utilisateur n'a plus aucun contact direct avec le café moulu, ce qui facilite grandement la manipulation de la mouture et permet la production d'une boisson dans des conditions plus propres.

C'est ainsi que le document FR 2713905 décrit une machine automatique pour la préparation d'infusions de boissons chaudes telles que du café qui comprend un groupe formé d'un corps placé en regard d'une chaudière, l'ensemble étant disposé horizontalement et le corps et la chaudière étant destinés à être rapprochés l'un de l'autre pour former une chambre d'infusion. Elle comporte, entre le corps et la chaudière, au niveau de la chambre d'infusion, des moyens de réception d'un conditionnement contenant le produit à infuser, des moyens de maintien en positon du conditionnement et des moyens d'éjection automatique du conditionnement.

Par ailleurs, le document WOA9517121 propose une machine automatique pour l'infusion de boissons chaudes comportant une chambre d'infusion destinée à recevoir un conditionnement, la chambre comportant deux demi chambres agencées pour être mutuellement éloignées ou rapprochées pour respectivement fermer ou ouvrir la chambre d'infusion. Un étrier est également prévu en position inférieure de la chambre d'infusion de sorte à retenir le conditionnement ou à autoriser son éjection par gravité lorsque la butée est escamotée. Par ailleurs, un volet est prévu en position supérieure de la chambre d'infusion.

Ce type de machine s'est avéré globalement satisfaisant. Cependant, de part son environnement concurrentiel il doit continuellement faire l'objet d'améliorations. Dans ce cadre, la présente invention vise à améliorer la fiabilité et la sécurité des machines existantes.

Pour atteindre cet objectif, il est prévu selon l'invention un système de production de boisson par infusion d'un produit contenu dans un conditionnement comprenant :
- une chambre d'infusion destinée à recevoir un conditionnement,
   o la chambre comportant deux demi chambres agencées pour être mutuellement éloignées ou rapprochées afin de respectivement fermer ou ouvrir la chambre,
- un dispositif de fermeture comprenant :
   o des moyens de fermeture amont agencés de manière à sélectivement empêcher ou à autoriser l'entrée d'un conditionnement dans la chambre,
   o des moyens de fermeture aval agencés de manière à sélectivement empêcher ou à autoriser la sortie d'un conditionnement hors de la chambre,
- le dispositif de fermeture étant agencé pour passer alternativement :
   o d'une première position dans laquelle :
      - les moyens de fermeture amont empêchent l'entrée d'un conditionnement dans la chambre,
      - les moyens de fermeture aval autorisent la sortie d'un conditionnement hors de la chambre,
   o à une deuxième position dans laquelle :
      - les moyens de fermeture amont autorisent l'entrée d'un conditionnement dans la chambre,
      - les moyens de fermeture aval permettent la réception d'un conditionnement introduit dans la chambre et empêchent la sortie de ce dernier hors de la chambre,
le dispositif de fermeture étant agencé de manière à ce que :
- la position des moyens de fermeture amont conditionne la position des moyens de fermeture aval,
- la position des moyens de fermeture aval conditionne la position des moyens de fermeture amont ;
- et en ce qu'il comporte des moyens d'alerte agencés de manière à envoyer un signal d'alerte lorsque le dispositif de fermeture n'est pas positionné de manière adéquate.

Ainsi, l'invention présente un fonctionnement séquentiel et des moyens d'alerte reposant sur ce fonctionnement séquentiel. En effet, pour une position donnée des moyens de fermeture amont, les moyens de fermeture aval n'admettent qu'une seule position. Et inversement, pour une position donnée des moyens de fermeture aval, les moyens de fermeture amont n'admettent qu'une seule position. Ainsi, le positionnement relatif entre les moyens de positionnement amont d'une part et aval d'autre part est parfaitement maîtrisé.

Or, la demanderesse s'est aperçue que la fiabilité des machines existantes dépend notamment de la maîtrise du positionnement relatif entre les moyens de positionnement amont d'une part et aval d'autre part.

Ainsi, l'invention permet d'améliorer la fiabilité des machines existantes ainsi que la sécurité des utilisateurs.

De manière facultative, l'invention pourra également présenter comme caractéristique additionnelle que le dispositif de fermeture est agencé de manière à ce que les moyens de fermeture amont soient solidaires des moyens de fermeture aval.

L'invention permet ainsi de diminuer significativement le nombre de pièces mobiles les unes par rapport aux autres ainsi que la complexité de la structure du système. Cette structure permet une simplification de la cinématique des organes permettant de passer alternativement de la première à la deuxième position. Les risques de blocage du mécanisme, le nombre de pièces mis en jeu, le coût de fabrication et le taux de défectuosité sont par conséquent substantiellement réduits.

Le système selon l'invention pourra en outre présenter au moins facultativement l'une quelconque des caractéristiques suivantes :
- le système comporte une pompe permettant d'alimenter en fluide la chambre, et/ ou un actionneur permettant de déplacer mutuellement les deux demi chambres et des moyens d'asservissement agencés de manière à asservir le fonctionnement de la pompe et/ou le fonctionnement de l'actionneur en fonction de la position du dispositif de fermeture,
- les moyens de fermeture amont sont agencés de manière à assurer la réception et le maintien d'un conditionnement hors de la chambre dans la première position,
- le dispositif de fermeture est agencé de manière à translater par rapport à un bâti du système pour passer alternativement de la première à la deuxième position,
- le dispositif de fermeture est agencé de manière à tourner par rapport à un bâti du système pour passer alternativement de la première à la deuxième position,
- le système comprend des moyens de guidage agencés de manière à guider le conditionnement en vue de son introduction dans la chambre et à le maintenir au droit de la chambre lors de l'effacement des moyens de fermeture amont,
- le système comprend une trappe définissant une ouverture disposée en amont des moyens de fermeture amont et en ce que le dispositif de fermeture comprend des moyens d'obstruction agencés de manière à laisser libre l'ouverture de la trappe lorsque le dispositif de fermeture est disposé dans la première position et à, obstruer l'ouverture de la trappe lorsque le dispositif de fermeture est disposé dans la deuxième position,
- les moyens de fermeture amont, les moyens de fermeture aval et les moyens d'obstruction sont mutuellement solidaires,
- le dispositif de fermeture est composé d'une pièce unique,

En outre, il est prévu selon l'invention un dispositif de fermeture apte à sélectivement empêcher et autoriser l'accès à une chambre d'infusion destinée à recevoir un conditionnement pour production de boisson comportant des moyens de fermeture amont destinés à sélectivement empêcher ou autoriser l'accès à la chambre depuis l'amont de cette dernière et des moyens de fermeture aval destinés à sélectivement réceptionner le conditionnement dans la chambre ou à autoriser la sortie du conditionnement hors de la chambre par gravité, les moyens de fermeture amont étant solidaires des moyens de fermeture aval.

Par ailleurs, le dispositif de fermeture présente comme caractéristique additionnelle qu'il est destiné à être déplacer de manière alternative selon au moins une direction principale donnée, en ce que les moyens de fermeture amont et les moyens de fermeture aval sont disposés de manière à présenter un décalage mutuel selon cette direction principale donnée.

On prévoit également selon l'invention une machine de production de boisson par infusion d'un produit contenu dans un conditionnement comprenant un système selon l'une quelconque des caractéristiques précédentes ou un dispositif de fermeture selon l'une quelconque des caractéristiques précédentes.

Par ailleurs, il est prévu selon l'invention un procédé de production de boisson par infusion d'un produit contenu dans un conditionnement en utilisant un système selon l'une quelconque des caractéristiques précédentes ou en utilisant un dispositif de fermeture selon l'une quelconque des caractéristiques précédentes, ou encore en utilisant une machine selon la caractéristique précédente.

D'autres caractéristiques, buts et avantages de la présente invention apparaîtront à la lecture de la description détaillée qui va suivre et au regard des dessins annexés donnés à titre d'exemple non limitatif et sur lesquels :
- la figure 1 est une vue en perspective du coté droit d'un système de production de boissons selon un exemple de réalisation de l'invention,
- la figure 2 est une vue en perspective du coté gauche du système de la figure 1,
- la figure 3 est une vue du coté droit du système de la figure 1,
- la figure 4 est une vue du coté gauche du système de la figure 1,
- la figure 5 est une vue du dessus du système de la figure 1,
- la figure 6 est une vue de l'avant du système de la figure 1,
- les figures 7 à 12 sont des vues en coupe longitudinale du système de la figure 1 représentant diverses étapes du procédé de production lors du fonctionnement,
- les figures 13 et 14 sont des vues en perspective respectivement de l'avant et de l'arrière du dispositif de fermeture équipant le système de la figure 1.

### Exemple de réalisation d'un système selon l'invention

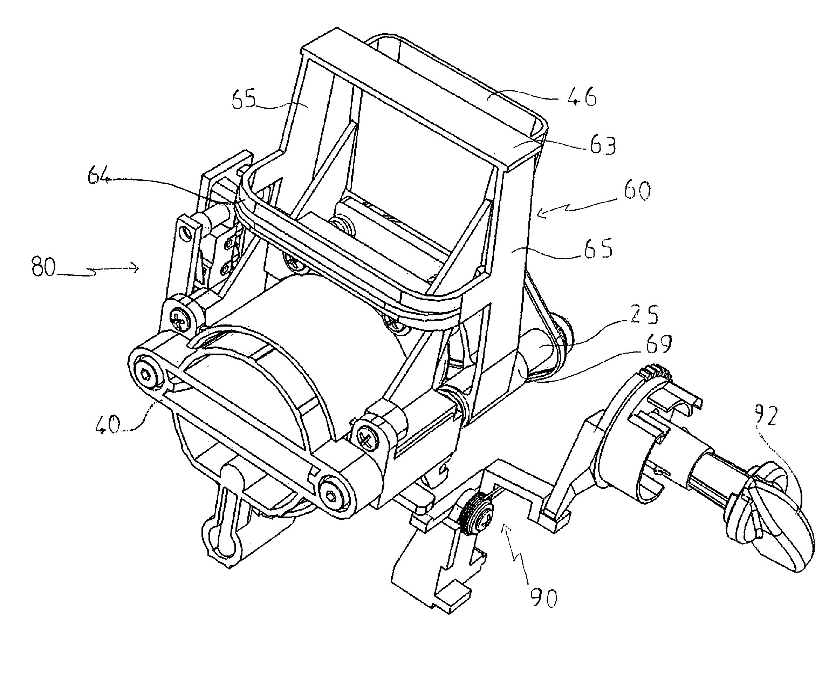

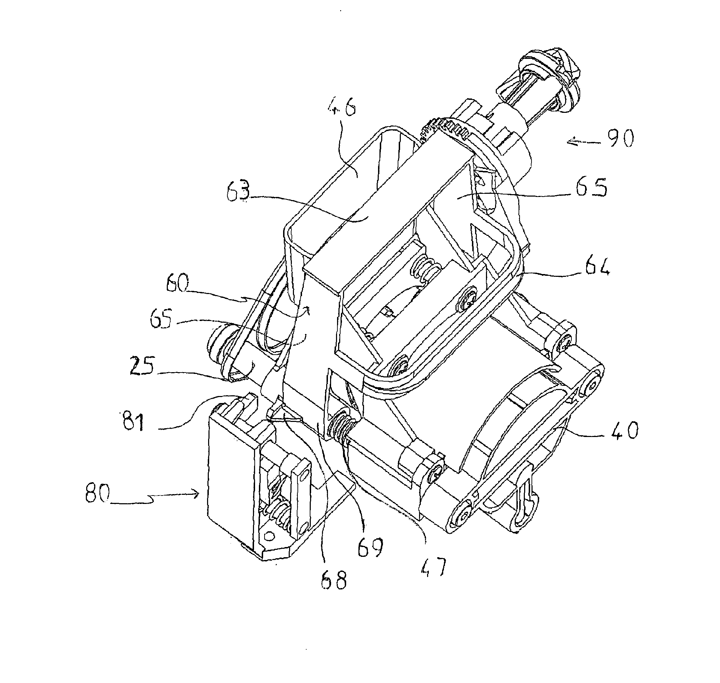

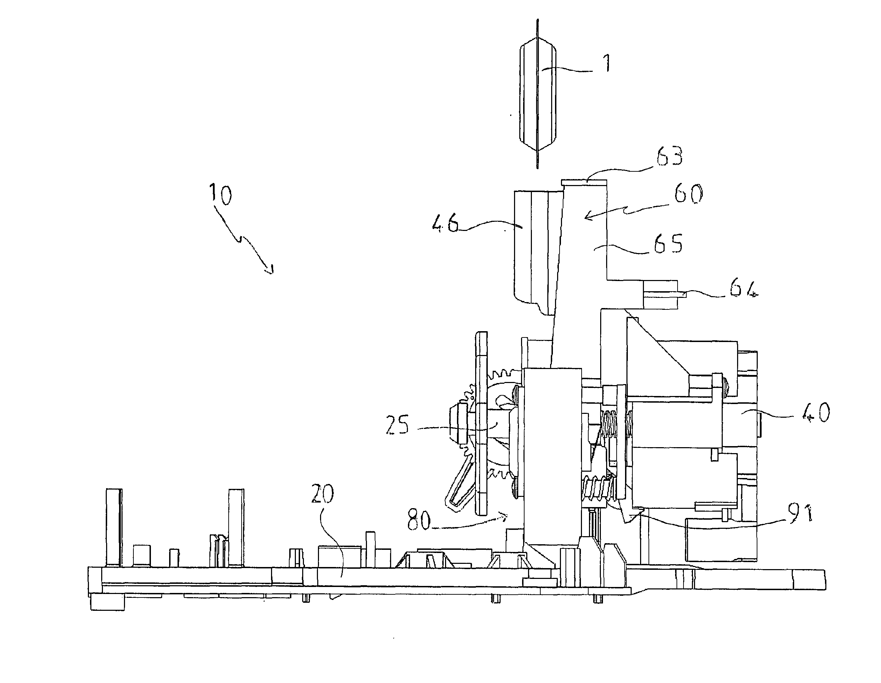

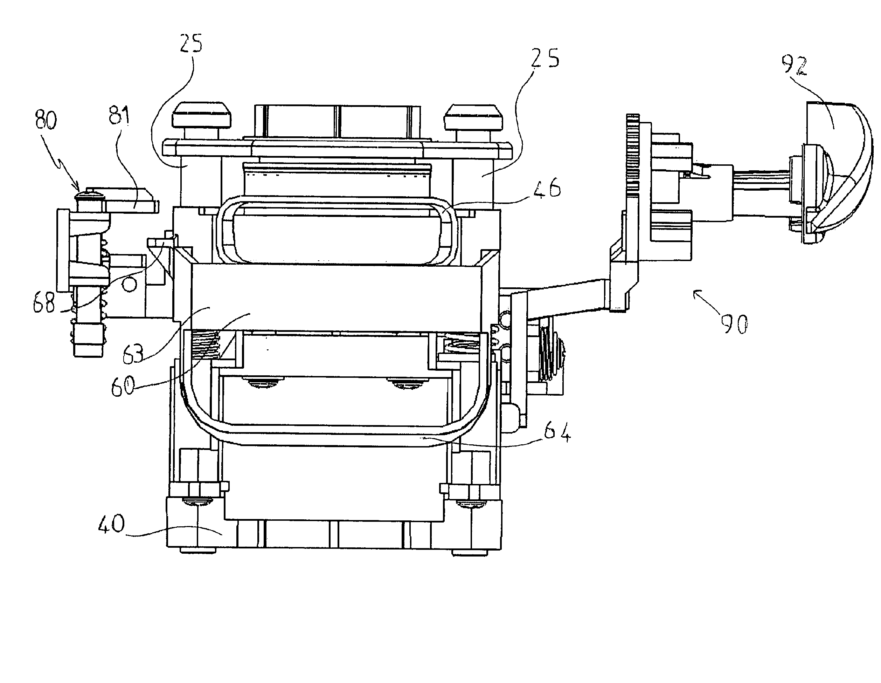

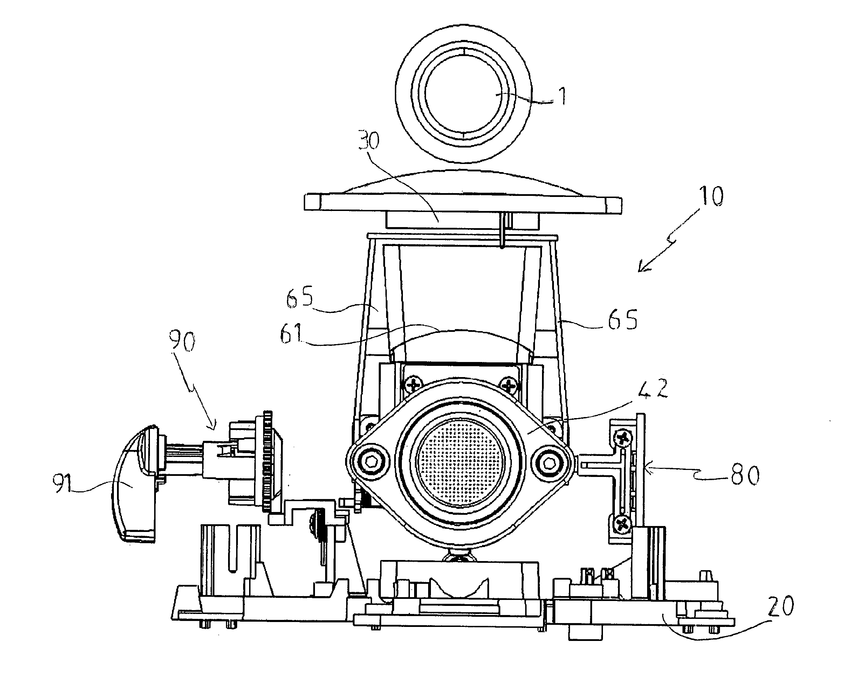

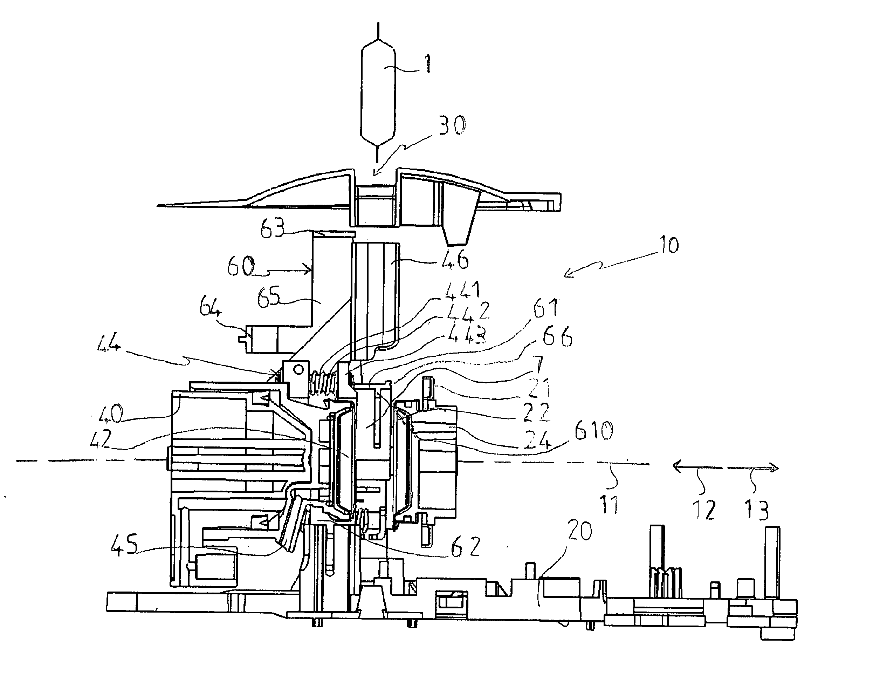

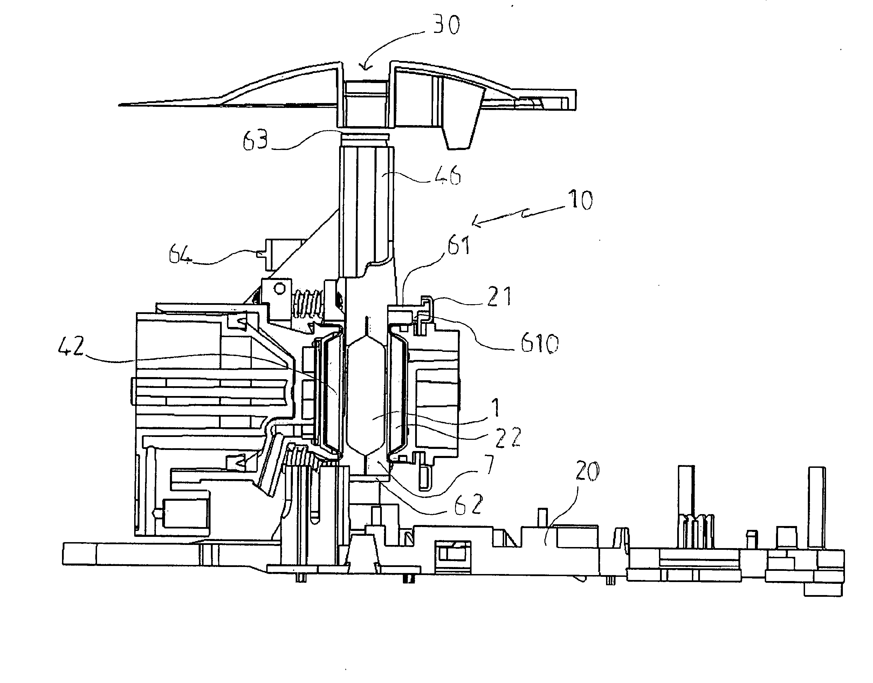

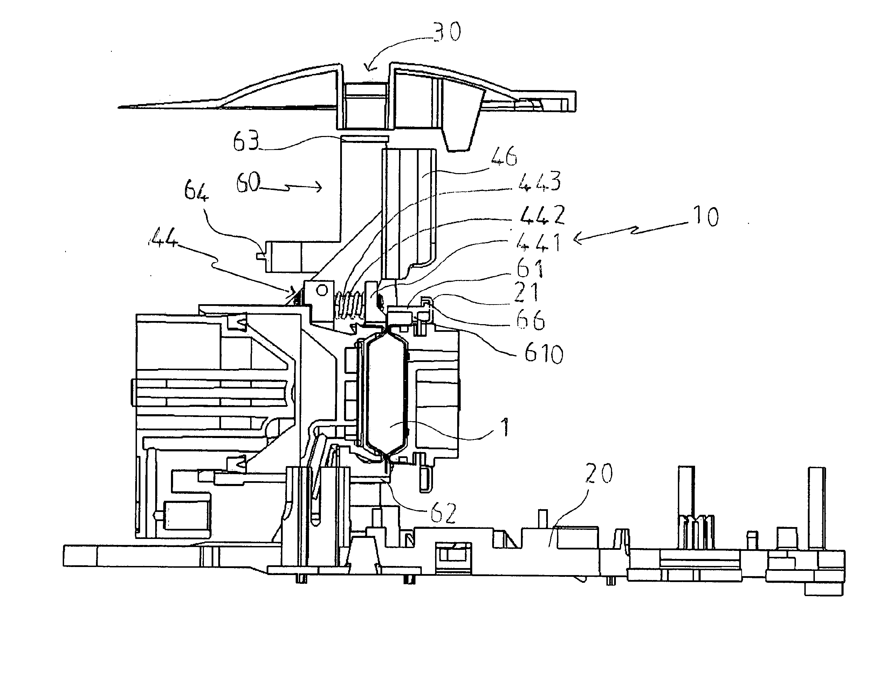

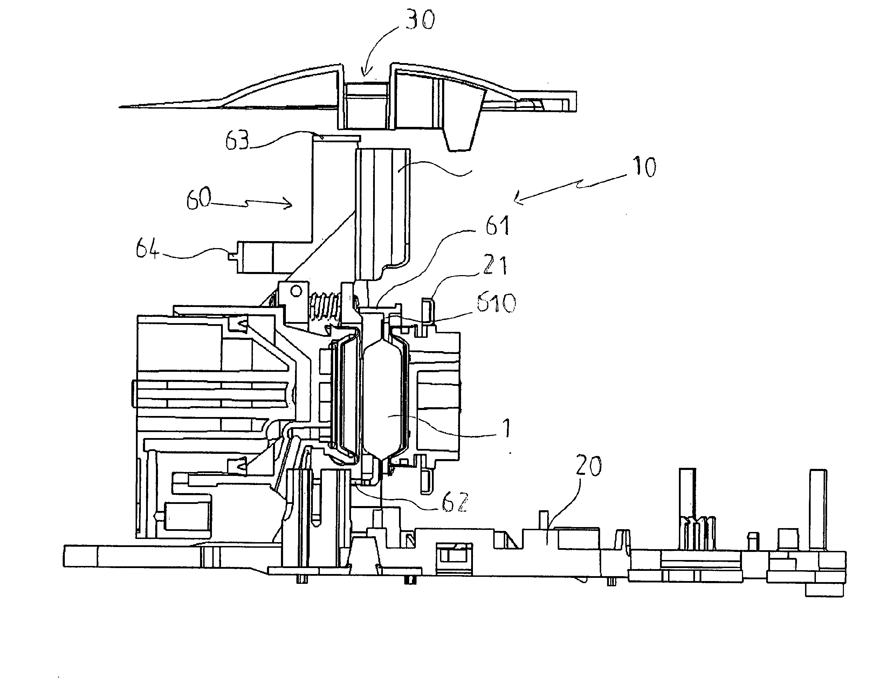

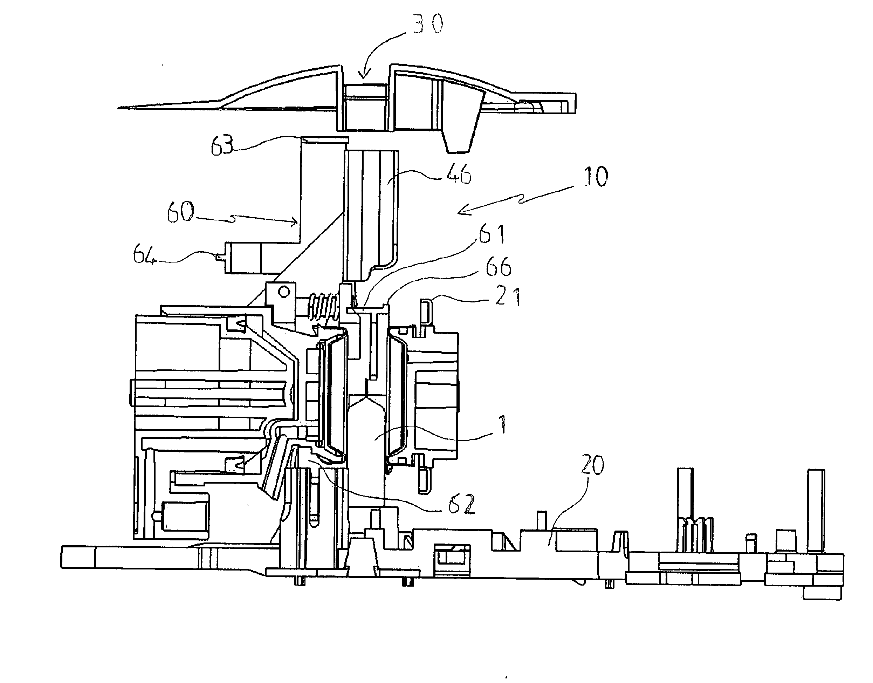

En référence aux figures 1 à 14, on a illustré un système 10 de préparation de boisson selon l'invention.

On qualifiera d'amont et d'aval les portions d'espace respectivement disposées avant et après un point considéré relativement au trajet normal d'un conditionnement 1 dans la machine lors d'un cycle de préparation d'une boisson.

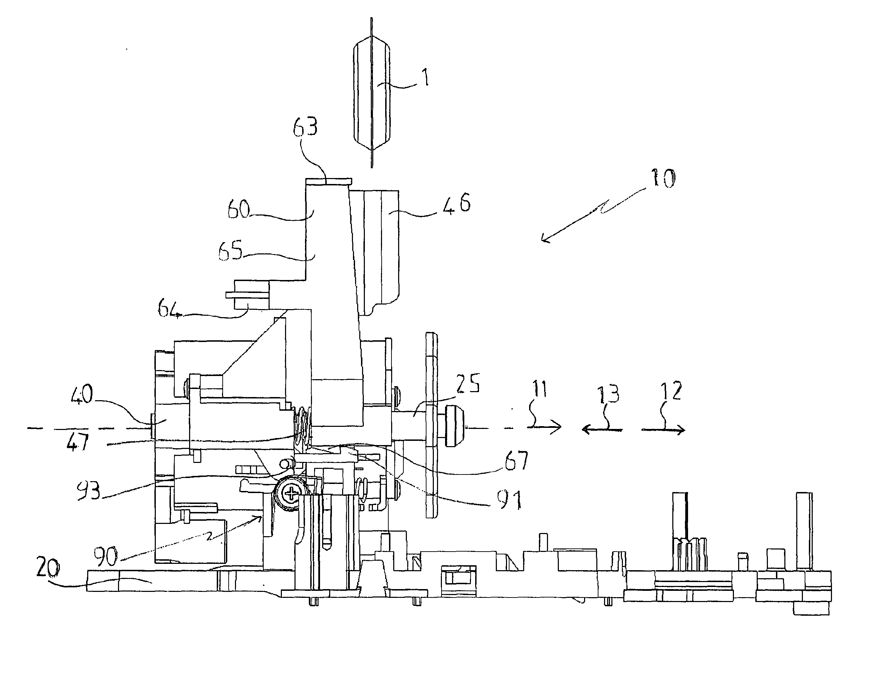

La présente invention utilise des conditionnements du type présentés sur les figures 3 à 12 et décrits dans le document WOA9507041 bien que cet exemple ne soit pas limitatif. Sur ces figures, le produit infusé, par exemple la mouture de café, est enfermée dans un volume intérieur du conditionnement 1 constitué par l'assemblage de couches jointes par leurs périphéries au niveau d'un pourtour. Avantageusement, la présente invention est utilisable avec des types variés de conditionnements. Elle n'implique notamment pas que le pourtour du conditionnement 1 soit rigide.

Le système 10 selon l'invention comporte une chambre 7 d'infusion destinée à recevoir un conditionnement 1. La chambre 7 comprend deux demi chambres agencées pour être mutuellement éloignées ou rapprochées par un actionneur afin de respectivement fermer ou ouvrir la chambre 7 d'infusion.

On désignera par demi chambres des pièces aptes à être disposées en contact mutuel ou au contact d'un conditionnement 1 pour former un volume étanche faisant office de chambre 7 d'infusion. L'invention n'implique en aucune manière que les deux demi chambres présentent mutuellement une quelconque symétrie.

Dans l'exemple de réalisation présenté, l'une des demi chambres, désignée par la suite demi chambre fixe 22, est solidaire d'un bâti 20 de la machine. L'autre demi chambre, désignée demi chambre mobile, est portée par une tête 41 de vérin 40 faisant office d'actionneur autorisant le rapprochement et l'éloignement mutuels des demi chambres. Chacune des demi chambres présente une extrémité définissant un pourtour contenu dans un plan sensiblement perpendiculaire à l'axe longitudinal 11.

On désignera par la suite direction longitudinale la direction comprenant l'axe de translation du vérin 40. On qualifiera de sens avant 12 le sens, selon cet axe contribuant au rapprochement mutuel des deux demi chambres et on qualifiera de sens arrière 13, le sens selon cet axe permettant un éloignement mutuel des deux demi chambres.

Dans le cadre de l'exemple de réalisation représenté, la demi chambre fixe 22 présente un conduit d'arrivée 24 d'eau apte à recevoir l'embouchure d'un circuit d'eau chaude. De manière conventionnelle, le circuit d'eau chaude comporte un réservoir, une chaudière permettant d'augmenter la température de l'eau du réservoir jusqu'à une température souhaitée en vue de son infusion dans la chambre 7, ainsi qu'une pompe permettant d'élever la pression de l'eau dans le circuit. Lors de l'infusion, les deux demi chambres sont maintenues fermement au contact l'une de l'autre et délimitent un volume étanche de réception du conditionnement 1. L'étanchéité peut être réalisée par application des pourtours des deux demi chambres sur le pourtour du conditionnement 1 qui fait alors office de joint. L'étanchéité peut également être assurée ou être renforcée des moyens d'étanchéité rapportés.

La demi chambre mobile 42 comporte un conduit d'évacuation 45 de boissons en communication fluidique d'une part avec l'intérieur de la chambre 7 d'infusion et avec une sortie de boisson d'autre part. Ce conduit d'évacuation 45 est destiné à assurer l'évacuation de la boisson résultant de l'infusion du conditionnement 1, vers un contenant tel qu'une tasse à café.

Après infusion, lorsque la demi chambre mobile 42 est éloignée de la demi chambre fixe 22, la chambre 7 d'infusion est ouverte, le conditionnement 1 déjà infusé n'est alors plus enserré dans la chambre 7. Ce conditionnement 1 est évacué de la chambre 7 par gravité et tombe dans un bac de récupération.

### Dispositif de fermeture

Le système 10 comporte également un dispositif de fermeture 60. Ce dispositif de fermeture 60 comporte des moyens de fermeture aval 62 ainsi que des moyens de fermeture amont 61. Il est distinct de chacune des demi chambres 22, 42 formant la chambre 7 d'infusion.

### Moyens de fermeture aval

Les moyens de fermeture aval 62 sont disposés en aval de la chambre 7 d'infusion. Ils sont agencés de manière à faire office de butée d'arrêt escamotable pour un conditionnement 1 introduit dans la chambre 7.

Dans une position non escamotée les moyens de fermeture aval 62 assurent la réception d'un conditionnement 1 introduit dans la chambre 7 alors que celle-ci est ouverte, et empêchent l'éjection par gravité de ce conditionnement 1 vers l'aval de la chambre 7.

Dans cette position les moyens de fermeture aval 62 interdisent également toute intrusion dans la chambre 7 depuis l'aval de cette dernière. Ainsi l'utilisateur ne peut pas, par exemple, introduire ses doigts dans la chambre 7.

Dans une position escamotée, les moyens de fermeture aval 62 ne forment pas une butée d'arrêt pour un conditionnement 1 introduit dans la chambre 7 et permettent donc l'évacuation d'un conditionnement 1 lors de l'ouverture de la chambre 7.

### Moyens de fermeture amont

Les moyens de fermeture amont 61 sont agencés de manière à faire office de butée d'arrêt escamotable. Ils sont disposés en amont de la chambre 7 d'infusion.

Dans une position non escamotée les moyens de fermeture amont 61 empêchent l'accès d'un conditionnement 1 ou de tout autre élément dans la chambre 7 d'infusion depuis l'amont de cette dernière. Dans cette position non escamotée les moyens de fermeture amont 61 assurent également la réception et participent au maintien en position d'un conditionnement 1 introduit dans le système 10.

En position escamotée les moyens de fermeture amont 61 autorisent l'introduction d'un conditionnement 1 dans la chambre 7 depuis l'amont de cette dernière.

Le système 10 est agencé de manière à faire passer le dispositif de fermeture 60 alternativement d'une première position dans laquelle les moyens de fermeture amont 61 empêchent l'entrée d'un conditionnement 1 dans la chambre 7, et les moyens de fermeture aval 62 assurent qu'aucun conditionnement 1 usagé ne demeure présent dans la chambre 7, à une deuxième position dans laquelle les moyens de fermeture amont 61 autorisent l'entrée d'un conditionnement 1 dans la chambre 7 et les moyens de fermeture aval 62 permettent la réception et le maintien d'un conditionnement 1 dans la chambre 7.

Le dispositif de fermeture 60 est agencé de manière à ce que la position des moyens de fermeture amont 61 conditionne la position des moyens de fermeture aval 62, et à ce que la position des moyens de fermeture aval 62 conditionne la position des moyens de fermeture amont 61.

Ainsi, pour une position donnée des moyens de fermeture amont 61, les moyens de fermeture aval 62 n'admettent qu'une seule position et inversement. Le système présente donc un fonctionnement séquentiel.

Or, la demanderesse a constaté que dans de nombreux types de systèmes existants les dysfonctionnements sont bien souvent dus à un positionnement relatif incorrect entre les moyens de fermeture amont et les moyens de fermeture aval. Ainsi, l'invention permet de réduire significativement les risques de blocage du système notamment dus au coincement du conditionnement entre des organes mécaniques. Le nombre d'interventions que doit effectuer un utilisateur ou un réparateur est par conséquent réduit. Elle contribue également à préserver l'intégrité du conditionnement 1. Par ailleurs, elle empêche qu'un conditionnement introduit dans la machine ne tombe directement dans le bac de récupération sans avoir été au préalable réceptionné au niveau de la chambre de fusion.

Les moyens de fermeture amont 61 et les moyens de fermeture aval 62 sont solidaires. Cette caractéristique contribue à simplifier la cinématique, à améliorer la robustesse et à limiter le coût de revient et le taux de défectuosité du système 10.

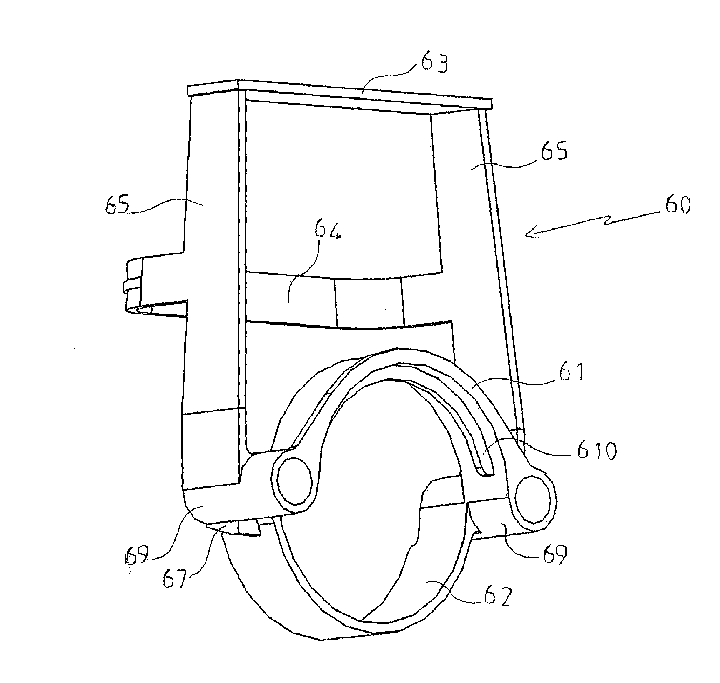

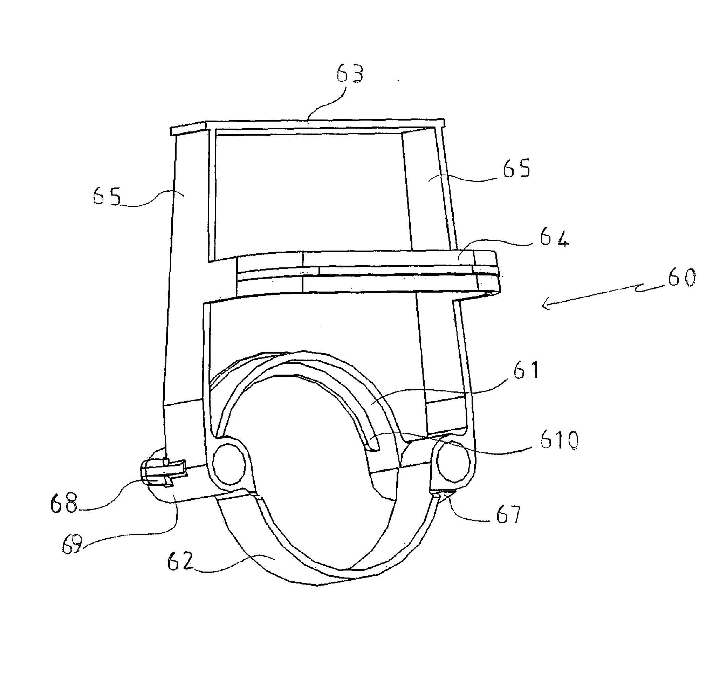

Les figures 13 et 14 laisse apparaître en détail le dispositif de fermeture 60 selon cet exemple de réalisation. Ce dispositif de fermeture 60 comprend :
- deux organes de guidage agencés de manière à guider le dispositif de fermeture 60 dans son déplacement alternatif entre la première et la deuxième position. Chacun des organes de guidage fait office de coulisseau 69 apte à assurer le guidage en translation du dispositif de fermeture 60 selon deux arbres 25, 25 portés par le bâti 20 du système 10 et s'étendant selon deux axes de guidage parallèles à l'axe longitudinal 11,
- deux bras 65, 65 s'étendant chacun depuis un coulisseau 69 respectif et dans une direction sensiblement perpendiculaire à l'axe de guidage,
- des moyens de fermeture amont 61 agencés de manière à faire office de butée d'arrêt pour un conditionnement 1 en amont de la chambre 7 lorsque le dispositif de fermeture 60 est disposé dans la première position. De manière avantageuse, les moyens de fermeture amont 61 présentent une forme de portion de couronne dont chacune des extrémités joint l'un des bras 65, 65 et qui est centrée sur un axe parallèle aux axes de guidage,
- des moyens de fermeture aval 62 agencés de manière à faire office de butée d'arrêt pour un conditionnement 1 en aval de la chambre 7 lorsque le dispositif de fermeture 60 est disposé dans la deuxième position. De manière avantageuse, les moyens de fermeture aval 62 présentent une forme de portion de couronne dont chacune des extrémités joint l'un des deux bras 65, 65 et qui est centré sur un axe parallèle aux axes de guidage.

Par ailleurs, les moyens de fermeture amont 61 et aval 62 sont disposés de manière à présenter un décalage mutuel selon la direction principale de déplacement du dispositif de fermeture 60. Ainsi, dans la deuxième position les moyens de fermeture amont 61 sont disposés sensiblement en arrière de la demi chambre fixe 22. Dans la première position les moyens de fermeture amont 61 sont disposés sensiblement en avant de la demi chambre fixe 22. Dans la première position les moyens de fermeture aval 62 sont disposés essentiellement en arrière de la demi chambre mobile 42.
Les dimensions de ce décalage sont choisies de manière à ce que :
- lorsque le dispositif de fermeture 60 est disposé dans la première position, les moyens de fermeture amont 61 empêchent l'entrée d'un conditionnement 1 dans la chambre 7, et les moyens de fermeture aval 62 autorisent la sortie d'un conditionnement 1 usagé hors de la chambre 7,
- lorsque le dispositif de fermeture 60 est disposé dans la deuxième position les moyens de fermeture amont 61 autorisent l'entrée d'un conditionnement 1 dans la chambre 7, les moyens de fermeture aval 62 permettent la réception et le maintien d'un conditionnement 1 introduit dans la chambre 7.

Ainsi dans cet exemple le dispositif de fermeture 60 étant monté coulissant sur l'axe longitudinal 11, les moyens de fermeture amont 61 et aval 62 présentent un décalage mutuel selon l'axe longitudinal 11. Les moyens de fermeture amont 61 sont disposés en avant des moyens de fermeture aval 62 selon ce même axe.

### Moyens d'actionnement

Le système 10 comporte des moyens d'actionnement permettant le passage alternatif de la première à la deuxième position. Ce sont les mêmes moyens d'actionnement qui agissent à la fois sur les moyens de fermeture amont 61 et sur les moyens de fermeture aval 62.

Le système 10 permet par conséquent de limiter considérablement les risques de coincement des conditionnements. Notamment, le système 10 empêche :
- qu'un conditionnement 1 introduit dans le système 10 ne tombe directement dans le bac de récupération sans avoir subi une infusion. En effet, la chambre 7 d'infusion est soit obstruée en amont par les moyens de fermeture amont 61 soit en aval par les moyens de fermeture aval 62.
- que deux conditionnements puissent être simultanément présents dans la chambre 7 d'infusion.
Le nombre d'actionneurs étant réduits, la complexité de la structure du système 10 s'en trouve significativement limitée. Cette structure permet une simplification de la cinématique des organes permettant de passer alternativement de la première à la deuxième position. L'encombrement et le nombre de pièces mises en jeu, le coût de fabrication ainsi que le taux de défectuosité sont par conséquent substantiellement réduits.

Les deux arbres 25, 25 sur lesquels coulissent les deux organes de guidage du dispositif de fermeture 60 participent à la liaison glissière de la tête 41 du vérin 40.

Un ressort d'écartement 47 tend à pousser le dispositif de fermeture 60 vers l'avant et à écarter le dispositif de fermeture 60 de la tête 41 du vérin 40.

De manière préférentielle, on dimensionnera le ressort d'écartement 47 de manière à ce qu'un coincement du conditionnement 1 entre le dispositif de fermeture 60 et un autre élément du système 10 ne nuise pas à l'intégrité du conditionnement 1. Ainsi, on choisira par exemple un ressort exerçant sur le dispositif de fermeture 60 une force d'environ 1,5 Newton.

L'extrémité avant des arbres 25, 25 est liée au bâti 20 et l'extrémité arrière de ces arbres est liée à la partie fixe du vérin 40. Sur chaque axe de guidage définit par un arbre 25 sont respectivement disposés selon la direction longitudinale depuis l'avant vers l'arrière : l'extrémité avant d'un arbre 25, un coulisseau 69 du dispositif de fermeture 60, un ressort d'écartement 47, la tête 41 de vérin 40 et enfin l'extrémité arrière d'un arbre 25.

Le déplacement vers l'arrière du dispositif de fermeture 60 ainsi que l'enclenchement du déplacement du dispositif de fermeture 60 dans un sens ou dans l'autre seront décrits plus en détail par la suite.

### Moyens de verrouillage

Par ailleurs, le système 10 comporte également des moyens de solidarisation permettant de solidariser automatiquement et de manière réversible le dispositif de fermeture 60 sur la tête 41 de vérin 40 lorsque ces deux éléments sont suffisamment proches. Les moyens de solidarisation comprennent des moyens de verrouillage et des moyens de déverrouillage.

Les moyens de verrouillage comprennent un cran 91 porté par une extrémité d'un pivot et monté à rotation sur la tête 41 de vérin 40 selon un axe horizontal perpendiculaire à l'axe longitudinal 11.

Les moyens de verrouillage comprennent également un ergot 67 porté par le dispositif de fermeture 60 et apparent sur la figure 13. L'ergot 67 est disposé de manière à pouvoir entrer en prise avec le cran 91 lorsque le dispositif de fermeture 60 et la tête 41 de vérin 40 sont suffisamment proches l'un de l'autre.

Par ailleurs, les moyens de verrouillage comprennent également un ressort de rotation 93 tendant à engager le cran 91 sur l'ergot 67 et à maintenir cette coopération. Ainsi, lorsque le dispositif de fermeture 60 est suffisamment proche de la tête 41 de vérin 40, le cran 91 et l'ergot 67 coopèrent pour permettre la solidarisation du dispositif de fermeture 60 sur la tête 41 de vérin 40.

Les moyens de déverrouillage permettent de désolidariser la tête 41 de vérin 40 et le dispositif de fermeture 60. A cet effet, ils comportent un bouton 92 de commande actionné de manière manuelle ou automatique ainsi qu'un ensemble cinématique permettant d'agir sur le pivot portant le cran 91. Lorsque le bouton 92 est actionné, le pivot tourne autour de son axe de manière à dégager le cran 91 de l'ergot 67 libérant ainsi le dispositif de fermeture 60 de la tête 41 du vérin 40.

Lorsque les deux demi chambres sont éloignées et que les moyens de déverrouillage sont actionnés, le dispositif de fermeture 60, sous l'action du ressort d'écartement 47 se déplace vers l'avant jusqu'à entrer en butée avec un siège 21 de butée d'arrêt portée par le bâti 20 sensiblement au niveau de la demi chambre fixe 22. Lorsque le vérin 40 est actionné, la tête 41 de vérin 40 est entraînée en translation vers l'avant jusqu'à ce que cette dernière arrive suffisamment près du dispositif de fermeture 60 pour que le cran 91, sous l'effet du ressort de rotation 93, engage l'ergot 67 du dispositif de fermeture 60. La tête 41 de vérin 40 et le dispositif de fermeture 60 sont alors solidaires l'un de l'autre. Lorsque la tête 41 de vérin 40 est ramenée en arrière, la coopération du cran 91 et de l'ergot 67 maintient la solidarisation entre la tête 41 de vérin 40 et le dispositif de fermeture 60, entraînant ce dernier également vers l'arrière. Il est à noter que le dimensionnement du ressort de compression disposé entre le dispositif de fermeture 60 et la tête 41 de vérin 40 ne permet pas de rompre cette solidarisation.

Une fois la tête 41 de vérin 40 arrivée en butée sur la partie fixe du vérin 40, le dispositif de déverrouillage peut à nouveau être enclenché pour libérer à nouveau le dispositif de fermeture 60 et donner lieu à un nouveau cycle.

### Moyens de guidage

Le système 10 comporte également des moyens de guidage 46. Ces moyens de guidage 46 présentent sensiblement la forme d'un manchon elliptique apte à empêcher tout mouvement significatif du conditionnement 1 dans un plan horizontal, et à autoriser son déplacement vertical. Ces moyens de guidage 46 sont solidaires de la tête 41 de vérin 40. Ils sont agencés de manière à assurer le guidage du conditionnement 1 en amont des moyens de fermeture amont 61. Par ailleurs, ils sont longitudinalement disposés de manière à être disposés au regard de l'ouverture de la chambre 7 dans la première position afin d'autoriser l'introduction d'un conditionnement 1 dans cette dernière lorsque les moyens de fermeture amont 61 sont escamotés. Dans la deuxième position, ils sont agencés de manière à être disposés sensiblement en avant de la chambre 7.

Par ailleurs, ils sont verticalement disposés de manière à être suffisamment proches des moyens de fermeture amont 61 pour assurer le maintien du conditionnement 1 lorsque ce dernier repose sur les moyens de fermeture amont 61. Ainsi, lorsqu'un conditionnement 1 repose sur les moyens de fermeture amont 61 et que ces derniers translatent vers l'avant, les moyens de guidage 46 contribuent à empêcher toute translation longitudinale significative du conditionnement 1. Ce dernier est donc maintenu au regard de l'ouverture de la chambre 7 d'infusion lorsque les moyens de fermeture amont 61 sont totalement escamotés. Le mouvement relatif dispositif de fermeture 60 et des moyens de guidage 46 permet ainsi le transfert du conditionnement 1 depuis les moyens de fermeture amont 61 à la chambre 7. Par ailleurs, ce mouvement relatif permet de protéger l'intégrité du conditionnement 1 lors de ce transfert.

En outre, ces moyens de guidage 46 permettent de maintenir en position un conditionnement 1 reposant sur les moyens de fermeture amont 61 de manière à faciliter la mise en place de ce conditionnement 1 dans la chambre 7. Les moyens de guidage 46 présentent deux rainures sensiblement parallèles et verticales, destinées à coopérer avec le pourtour du conditionnement 1 afin d'améliorer le guidage de ce dernier.

### Trappe

Le système 10 comprend également une trappe 30 définissant une ouverture disposée en amont des moyens de fermeture amont 61 et en amont des moyens de guidage 46. L'ouverture est disposée longitudinalement de manière à être située au droit des moyens de fermeture amont 61 lorsque le dispositif de fermeture 60 est disposé dans la première position. L'ouverture définit par la trappe 30 est accessible par un utilisateur et est destinée à recevoir un conditionnement 1 pour son introduction dans le système 10.

### Moyens d'obstruction

Le dispositif de fermeture 60 comporte des moyens d'obstruction 63 agencés de manière à :
- obstruer l'ouverture de la trappe 30 lorsque le dispositif de fermeture 60 est disposé dans la deuxième position,
- laisser libre l'ouverture de la trappe 30 lorsque le dispositif de fermeture 60 est disposé dans la première position.

Les moyens d'obstruction 63 comprennent une butée supérieure disposée en amont des moyens de fermeture amont 61, en amont des moyens de guidage 46 et en aval de l'ouverture de la trappe 30. La butée supérieure s'étend d'un bras 65 à l'autre du dispositif de fermeture 60 et fait office de butée d'arrêt escamotable pour un conditionnement 1. Elle est disposée, selon l'axe longitudinal 11, sensiblement au droit des moyens de fermeture aval 62.

Ainsi, lorsque le dispositif de fermeture 60 est disposé dans la première position, le conditionnement 1 introduit dans l'ouverture de la trappe 30 accède librement aux moyens de guidage 46 et arrive en butée sur les moyens de fermeture amont 61.

Lorsque le dispositif de fermeture 60 est disposé dans la deuxième position, l'introduction d'un conditionnement 1 dans l'ouverture de la trappe 30 est stoppée en amont des moyens de guidage 46 par les moyens d'obstruction 63. Ce conditionnement 1 n'accède donc ni aux moyens de fermeture amont 61 ni aux moyens de fermeture aval 62, ni à la chambre 7.

Les moyens d'obstruction 63 empêchent ainsi qu'un conditionnement 1 ne soit introduit alors qu'un autre conditionnement 1 est déjà présent sur les moyens de fermeture amont 61 ou dans la chambre 7.

Par ailleurs, lorsque le dispositif de fermeture 60 est dans la deuxième position, les moyens d'obstruction 63 empêchent tout accès au système 10 d'infusion ce qui permet d'améliorer la sécurité de l'ensemble de la machine. En effet, dans cette position un utilisateur ne peut notamment introduire un objet ou ses doigts à l'intérieur du système 10.

Avantageusement, le dispositif de fermeture 60 est formé d'une pièce unique venue de matière. Le dispositif de fermeture 60 pourra par exemple être constitué en aluminium, en acier inoxydable ou encore en plastique.

### Moyens d'asservissement de la pompe et Moyens d'alerte

Comme indiqué précédemment, le système 10 comporte une pompe destinée à alimenter la chambre 7 en fluide. Par ailleurs, cette pompe, dans l'exemple particulier décrit, alimente également l'actionneur permettant de fermer et d'ouvrir la chambre 7. En effet, la pompe alimente un circuit hydraulique d'actionnement du vérin 40.

La pompe est alimentée en électricité par un circuit électrique muni d'un premier et d'un deuxième interrupteur.

Le premier interrupteur se ferme sous la commande d'un utilisateur. Avantageusement, le bouton de commande 92 est lié au premier interrupteur et son actionnement permet de fermer le premier interrupteur.

Le deuxième interrupteur se ferme lorsque le dispositif de fermeture 60 est disposé dans la deuxième position. De manière plus précise, le système 10 comporte des moyens d'asservissement 80 agencés de manière à servir le fonctionnement de la pompe en fonction de la position du dispositif de fermeture 60. Ces moyens d'asservissement 80 font office de deuxième interrupteur et comportent un contacteur 81 de fin de course solidaire du bâti 20, ainsi qu'un doigt de contact 68 porté par le dispositif de fermeture 60 et agencé de manière à coopérer avec le contacteur 81. Le doigt 68 de contact apparaît sur la figure 14 représentant en détail le dispositif de fermeture 60. Les moyens d'asservissement 80 sont agencés de manière à ce que le contacteur 81 et le doigt de contact 68 soient en contact mutuel lorsque le dispositif de fermeture 60 est disposé dans la deuxième position. Dans cette position, le doigt de contact 68 appuie sur le contacteur 81 et permet de fermer le circuit électrique d'alimentation de la pompe. Dans cette position, la pompe est alimentée en électricité et peut fonctionner. Lorsque le circuit est ouvert, c'est-à-dire lorsque le contacteur 81 n'est pas poussé par le doigt de contact 68, la pompe ne peut fonctionner. Ainsi, le fonctionnement de la pompe est subordonné au positionnement adéquat des moyens de fermeture amont 61 et aval 62.

Ainsi, l'invention permet d'améliorer significativement la maîtrise de la position relative entre les moyens de fermeture amont 61, les moyens de fermeture aval 62, les moyens de guidage 46 et les deux demi chambres 22, 42. Les risques de dysfonctionnement du système 1 sont par conséquent substantiellement réduits.

Le deuxième interrupteur admet deux positions :
- une position dite de fonctionnement dans laquelle il permet de fermer le circuit de commande de la pompe. Cette position de fonctionnement est obtenue lorsque le dispositif de fermeture 60 est plaqué contre la demi chambre fixe 22, et que le bouton de commande 92 a été actionné par un utilisateur.
- une position dite de non fonctionnement, dans laquelle il permet de fermer un circuit alimentant en électricité des moyens d'alerte.

En effet, le système 10 comporte au niveau du circuit d'alimentation de la pompe des moyens d'alerte. Ces moyens d'alerte sont alimentés en électricité lorsque le premier interrupteur est fermé et que la position mutuelle du contacteur 81 et du doigt de contact 68 ne permet pas l'alimentation de la pompe.

Lorsqu'ils sont alimentés, les moyens d'alerte déclenchent un signal d'alerte visuel ou sonore par exemple, destiné à avertir l'utilisateur que la machine ne fonctionne pas normalement et qu'une intervention de sa part est requise. Cette intervention peut consister à saisir manuellement le dispositif de fermeture 60 et à le ramener dans la position adéquate afin de réarmer le système 10. A cet effet, ce dernier comprend un élément de préhension 64 aisément accessible par l'utilisateur en ouvrant un capot supérieur contenant le système 10 par exemple. Cet élément de préhension 64 fait office de anse s'étendant dans un plan horizontal vers l'arrière et présentant deux extrémités liées respectivement à un des bras 65. Cette intervention peut également nécessiter de retirer un conditionnement 1 ou un objet quelconque coincé lorsque celui-ci est à l'origine du mauvais positionnement de la pompe.

Par conséquent, le système 10 permet d'améliorer significativement la sécurité pour un utilisateur. En effet, si la trappe 30 supérieure reste ouverte du fait de la présence d'un obstacle quelconque tel notamment que des doigts, la pompe ne fonctionne pas et ni la translation du vérin 40, ni l'injection d'eau dans la chambre 7 ne peuvent être enclenchées. Le système présente donc un fonctionnement séquentiel et conditionnel.

Par ailleurs, les moyens d'asservissement 80 permettent également d'interdire le fonctionnement de la pompe, lorsque la présence d'un obstacle en partie basse du système 10 empêche un positionnement correct du dispositif de fermeture 60. Ainsi, lorsque le bac de récupération est plein et qu'un conditionnement 1 déjà infusé ne peut être évacué correctement et empêche le fonctionnement adéquat du dispositif de fermeture 60, la pompe ne peut fonctionner et les moyens d'alerte sont activés.

En outre, l'invention permet de préserver l'intégrité d'un conditionnement 1 qui serait présent dans la chambre 7 alors que le dispositif de fermeture 60 est bloqué. En effet, l'actionnement de la pompe aurait pour effet d'écraser le conditionnement 1 et de l'humidifier.

### Premiers moyens de dévêtissement

Le système 10 comporte également des premiers moyens de dévêtissement 610 agencés de manière à assurer un parfait décollement entre le conditionnement 1 et la demi chambre fixe 22 après infusion. En effet, le contact ferme entre le conditionnement 1 et les deux demi chambres peut empêcher que ce conditionnement 1 soit éjecté par simple éloignement de la demi chambre fixe 22 et par retrait des moyens de fermeture aval 62. Ces premiers moyens de dévêtissement 610 présentent une forme générale d'arête s'étendant sensiblement selon une forme de couronne, cette arête étant solidaire du dispositif de fermeture 60 et disposés au niveau des moyens de fermeture amont 61. Ces premiers moyens de dévêtissement 610 sont agencés de manière à entrer au contact du pourtour du conditionnement 1 et à déplacer ce dernier vers l'arrière lors du retour vers l'arrière du dispositif de fermeture 60. Ces premiers moyens de dévêtissement 610 présentent une structure particulièrement, simple et contribuent à améliorer significativement le fonctionnement du système 10.

### Deuxièmes moyens de dévêtissement

Le système 10 comporte également des deuxièmes moyens de dévêtissement 44 agencés de manière à assurer un décollement parfait entre la demi chambre mobile 42 et le conditionnement 1 après infusion. Ces deuxièmes moyens de dévêtissement 44 comprennent un arbre 441 de dévêtissement monté à coulissement longitudinal sur la tête 41 de vérin 40 et dont l'extrémité avant porte un doigt 443 de dévêtissement.

Un ressort de dévêtissement 442 agissant en compression et disposé sur l'arbre 441 de dévêtissement entre la tête 41 de vérin 40 et le doigt 443. Il tend à repousser ce dernier vers l'avant.

Ces deuxièmes moyens de dévêtissement 44 sont agencés de manière à ce que le ressort de dévêtissement 442 tende à placer le doigt 443 au contact du pourtour d'un conditionnement 1 introduit dans la chambre 7 et à écarter ce dernier de la demi chambre mobile 42. Lors du dévêtissement, le doigt 443 est disposé en avant de l'extrémité avant de la demi chambre mobile 42.

Le ressort de dévêtissement 442 exerce sur le conditionnement 1 un effort suffisamment faible pour ne pas endommager ce dernier en cas de coincement. Ce ressort est par exemple dimensionné de manière à exercer un effort de l'ordre de 0,2 Newton.

### Exemple d'un procédé de préparation de boisson selon l'invention

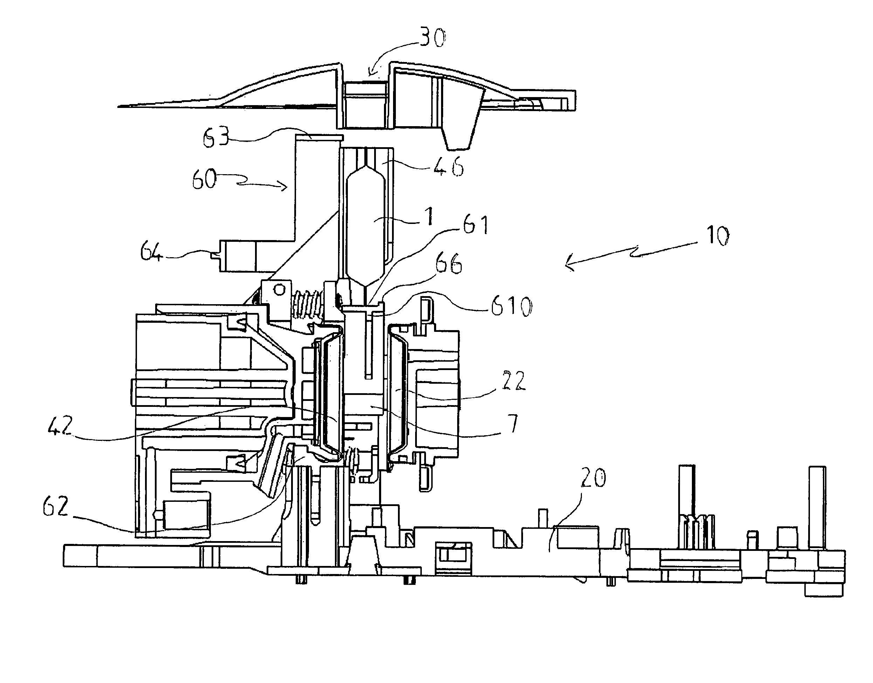

En référence aux figures 8 à 12 on va maintenant décrire un cycle de fonctionnement permettant de préparer une boisson.

En début de cycle, la tête 41 de vérin 40 est repoussée en arrière, la demi chambre mobile 42 est alors éloignée de la demi chambre fixe 22 et la chambre 7 est donc dans sa position ouverte. Les moyens de solidarisation 90 assurent un contact ferme entre la tête 41 de vérin 40 et le dispositif de fermeture 60. Ce dernier est donc disposé dans la première position. Ainsi :
- les moyens de fermeture amont 61 empêchent l'accès à la chambre 7 d'infusion depuis la partie amont de cette dernière,
- les moyens de fermeture aval 62 permettent l'éjection par gravité d'un conditionnement 1 déjà infusé et présent dans la chambre 7,
- les moyens d'obstruction 63 laissent libre l'ouverture de la trappe 30,
- les moyens de guidage 46 sont disposés au droit de l'ouverture de la trappe 30.

Par ailleurs, l'extrémité arrière des premiers moyens de dévêtissement 610 est disposée en arrière de l'extrémité arrière de la demi chambre fixe 22. L'extrémité avant des deuxièmes moyens de dévêtissement 44 est disposée en avant de l'extrémité avant de la demi chambre mobile 42. Ainsi, aucun conditionnement 1 déjà infusé ne se trouve entre les deux demi chambres.

L'utilisateur introduit un conditionnement 1 dans l'ouverture de la trappe 30. Ce conditionnement 1 tombe par gravité en étant guidé et en étant maintenu en position sensiblement verticale par les moyens de guidage 46. Le déplacement par gravité de ce conditionnement 1 est interrompu par les moyens de fermeture amont 61 disposés au regard de l'ouverture de la trappe 30 et des moyens de guidage 46. Ces moyens de fermeture amont 61 empêchent au conditionnement 1 d'accéder à l'intérieur de la chambre 7.

Dans une étape ultérieure, l'utilisateur actionne les moyens de déverrouillage par l'intermédiaire du bouton de commande 92. Ces moyens de déverrouillage permettent de supprimer la solidarisation entre le vérin 40 et le dispositif de fermeture 60. Ce dernier est alors libre de coulisser vers l'avant sous l'effet du ressort d'écartement 47. Lors de ce déplacement, les moyens de fermeture amont 61 se déplacent vers l'avant et les moyens de guidage 46 restent fixes maintenant ainsi le conditionnement 1 au droit de l'ouverture de la chambre 7. Au fur et à mesure de leur déplacement vers l'avant, les moyens de fermeture amont 61 libèrent l'ouverture de la chambre 7. Par ailleurs, les moyens de fermeture aval 62 obstruent progressivement l'ouverture de la chambre 7 en aval de cette dernière. Lorsque l'ouverture de la chambre 7, dégagée par les moyens de fermeture amont 61 est suffisamment importante, le conditionnement 1 s'introduit par gravité dans la chambre 7 où il est réceptionné par les moyens de fermeture aval 62 formant une butée d'arrêt.

Le déplacement vers l'avant du dispositif de fermeture 60 se poursuit jusqu'à ce que la butée mobile de fin de course 66 portée par ce dernier entre au contact du siège de butée 21 porté par le bâti 20. Dans cette position le dispositif de fermeture 60 est disposé dans la deuxième position. Dans cette position :
- les moyens de fermeture amont 61 permettent l'accès à la chambre 7 d'infusion depuis l'amont de cette dernière,
- les moyens de fermeture aval 62 assurent la réception du conditionnement 1 introduit dans la chambre 7,
- les moyens d'obstruction 63 obstruent l'ouverture de la trappe 30 empêchant ainsi l'introduction de conditionnements ou de tout autre objet à travers cette dernière,
- le contacteur 81 est au contact du doigt 443 et les moyens d'asservissement 80 permettent le fonctionnement de la pompe.

Le circuit hydraulique du vérin étant alimenté par la pompe, le vérin 40 entraîne le déplacement de la tête 41 de vérin 40 vers l'avant jusqu'à ce que les deux demi chambres forment un volume étanche enserrant le conditionnement 1. L'eau chauffée par la chaudière et issue du réservoir pénètre dans la chambre 7 ainsi fermée permettant l'infusion du conditionnement 1. Le conduit d'évacuation 45 porté par la demi chambre mobile 42 permet l'extraction de la boisson vers le contenant.

Lorsque la tête 41 de vérin 40 est appliquée fermement contre le pourtour du conditionnement 1 et l'extrémité arrière de la demi chambre fixe 22, le cran 91 des moyens de verrouillage entre en coopération avec l'ergot 67 du dispositif de fermeture 60 de manière à solidariser ce dernier sur la tête 41 de vérin 40.

Une fois l'infusion terminée, la tête 41 de vérin 40, sous l'effet d'un ressort de retour agissant en compression, amorce son retrait vers l'arrière entraînant avec elle le dispositif de fermeture 60. Les deuxièmes moyens de dévêtissement 44 assurent le décollement entre le conditionnement 1 et la demi chambre mobile 42.

Au cours de la translation vers l'arrière du dispositif de fermeture 60, les premiers moyens de dévêtissement 610 entrent au contact du pourtour du conditionnement 1 entraînant le décollement de celle-ci par rapport à la demi chambre fixe 22. Le conditionnement 1 se trouve ainsi disposé entre les deux demi chambres sans être pour autant solidaires de l'une d'elles.

Les deux demi chambres en forme de coupelles assurent sensiblement un guidage du conditionnement 1 vers l'ouverture de la chambre 7 lorsqu'elles s'éloignent mutuellement. Le dispositif de fermeture 60 est ramené jusqu'à la première position : les moyens de fermeture aval 62 n'entravent plus l'éjection du conditionnement 1 et ce dernier peut alors être évacué vers le bac de récupération de la chambre 7 par gravité. Par ailleurs, les moyens d'obstruction 63 laissent l'ouverture de la trappe 30 libre et un nouveau conditionnement 1 peut être inséré dans le système 10.

Avantageusement, l'invention présente un fonctionnement séquentiel qui permet d'améliorer la fiabilité des systèmes existants, de limiter les risques de blocage du mécanisme et de préserver l'intégrité du conditionnement.

Par ailleurs, elle présente une structure et une cinématique simples. Elle présente un nombre de pièce, un coût de fabrication, un taux de défectuosité et une difficulté d'entretien réduits

En outre, elle présente un fonctionnement conditionnel, la pompe étant asservie en fonction du positionnement du dispositif de fermeture. La fiabilité du système ainsi que la sécurité des utilisateurs s'en trouvent renforcées et l'intégrité du conditionnement est préservée.

De plus, elle présente une robustesse améliorée et un encombrement réduit.

### Autres modes de réalisation

De nombreuses variantes peuvent être apportées au dispositif décrit précédemment sans sortir pour autant du cadre de l'invention.

Notamment, le dispositif de fermeture 60 peut être agencé pour passer alternativement de la première position à la deuxième position par un mouvement de rotation et non pas par un mouvement translation. Cette rotation peut s'effectuer selon l'axe longitudinal 11, ou selon un axe vertical ou encore selon un axe horizontal perpendiculaire à l'axe longitudinal 11. Dans chacun de ces cas, on veillera à ce que les moyens de fermeture amont 61 et les moyens de fermeture aval 62 présentent un décalage angulaire approprié selon l'axe de rotation du dispositif de fermeture 60.

On pourra également prévoir que le dispositif de fermeture 60 soit agencé de manière à translater suivant une direction principale différente de celle de l'axe longitudinal 11, comme par exemple une direction principale horizontale et perpendiculaire à l'axe longitudinal 11. Pour un tel dispositif de fermeture 60 les moyens de fermeture amont 61 et aval 62 d'un tel dispositif sont décalés selon cette direction principale.

Dans l'exemple décrit précédemment, l'actionnement de la demi chambre mobile 42 et du dispositif de fermeture 60 est assuré par un vérin 40 hydraulique. Dans d'autres modes de réalisation, on peut prévoir d'assurer cet actionnement manuellement, au moyen d'un levier par exemple ou au moyen d'une motorisation par exemple à visse sans fin ou encore au moyen d'un vérin pneumatique.

On pourra également prévoir que l'ouverture et la fermeture de la chambre 7 d'infusion soient assurées par le déplacement des deux demi chambres. Par ailleurs, le déplacement par rapport au bâti 20 de chacune de ces deux demi chambres peut être assuré soit par translation soit par rotation.

L'adaptation du système 10 décrit précédemment à des conditionnements différents de celui représenté sur les figures peut être effectuée aisément en modifiant simplement les dimensions et la configuration des moyens de fermeture amont 61 et aval 62, des moyens de guidage 46, de l'ouverture de la trappe 30 ainsi que des deux demi chambres 22, 42.

### REFERENCES

- 1.: Conditionnement
- 10.: Système
- 11.: Axe longitudinal 11
- 12.: Sens avant
- 13.: Sens arrière
- 20.: Bâti
- 21.: Siège de butée
- 22.: Demi chambre fixe
- 24.: Conduit d'arrivée
- 25.: Arbre
- 30.: Trappe
- 40.: Vérin
- 41.: Tête de vérin
- 42.: Demi chambre mobile
- 44.: Deuxièmes moyens de dévêtissement
- 441.: Arbre de dévêtissement
- 442.: Ressort de dévêtissement
- 443.: Doigt
- 45.: Conduit d'évacuation
- 46.: Moyens de guidage
- 47.: Ressort d'écartement
- 60.: Dispositif de fermeture
- 61.: Moyens de fermeture amont
- 62.: Moyens de fermeture aval
- 63.: Moyens d'obstruction
- 64.: Elément de préhension
- 65.: Bras
- 66.: Butée mobile de fin de course
- 67.: Ergot
- 68.: Doigt de contact
- 69.: Coulisseau
- 610.: Premiers moyens de dévêtissement
- 7.: Chambre
- 80.: Moyens d'asservissement
- 81.: Contacteur
- 90.: Moyens de solidarisation
- 91.: Cran
- 92.: Bouton de commande
- 93.: Ressort de rotation

## Revendications

1. Système (10) de production de boisson par infusion d'un produit contenu dans un conditionnement (1) comprenant :
• une chambre (7) d'infusion destinée à recevoir un conditionnement (1),
o la chambre (7) comportant deux demi chambres (22, 42) agencées pour être mutuellement éloignées ou rapprochées afin de respectivement fermer ou ouvrir la chambre (7),
• un dispositif de fermeture (60) comprenant :
o des moyens de fermeture amont (61) agencés de manière à sélectivement empêcher ou à autoriser l'entrée d'un conditionnement (1) dans la chambre (7),
o des moyens de fermeture aval (62) agencés de manière à sélectivement empêcher ou à autoriser la sortie d'un conditionnement (1) hors de la chambre (7),
• le dispositif de fermeture (60) étant agencé pour passer alternativement :
o d'une première position dans laquelle :
- les moyens de fermeture amont (61) empêchent l'entrée d'un conditionnement (1) dans la chambre (7),
- les moyens de fermeture aval (62) autorisent la sortie d'un conditionnement (1) hors de la chambre (7),
○ à une deuxième position dans laquelle :
- les moyens de fermeture amont (61) autorisent l'entrée d'un conditionnement (1) dans la chambre (7),
- les moyens de fermeture aval (62) permettent la réception d'un conditionnement (1) introduit dans la chambre (7) et empêchent la sortie de ce dernier hors de la chambre (7),
le dispositif de fermeture (60) étant agencé de manière à ce que :
- la position des moyens de fermeture amont (61) conditionne la position des moyens de fermeture aval (62)
- la position des moyens de fermeture aval (62) conditionne la position des moyens de fermeture amont (61),
**caractérisé en ce qu'**il comporte des moyens d'alerte agencés de manière à envoyer un signal d'alerte à un utilisateur lorsque le dispositif de fermeture (60) n'est pas positionné de manière adéquate.

2. Système (10) selon la revendication 1 **caractérisé en ce que** les moyens de fermeture amont (61) sont solidaires des moyens de fermeture aval (62).

3. Système (10) selon l'une quelconque des revendications précédentes, **caractérisé en ce que** le dispositif de fermeture (60) est agencé de manière à translater ou à tourner par rapport à un bâti (20) du système (10) pour passer alternativement de la première à la deuxième position.

4. Système (10) selon l'une quelconque des revendications précédentes, dans lequel les moyens d'alerte sont configurés pour déclencher un signal d'alerte visuel ou sonore lorsqu'ils sont alimentés.

5. Système (10) selon l'une quelconque des revendications précédentes, **caractérisé en ce qu'**il comporte une pompe permettant d'alimenter en fluide la chambre (7), et/ou un actionneur permettant de déplacer mutuellement les deux demi chambres (22, 42) et des moyens d'asservissement (80) agencés de manière à asservir le fonctionnement de la pompe et/ou le fonctionnement de l'actionneur en fonction de la position du dispositif de fermeture (60).

6. Système (10) selon la revendication précédente, dans lequel les moyens d'asservissement (80) sont configurés pour interdire le fonctionnement de la pompe lorsque la présence d'un obstacle en partie basse du système (10) empêche un positionnement correct du dispositif de fermeture (60).

7. Système (10) selon la revendication précédente comportant un bac de récupération de conditionnements (1) déjà infusés et agencé de sorte que lorsque le bac de récupération est plein et qu'un conditionnement (1) déjà infusé ne peut être évacué correctement et empêche le fonctionnement adéquat du dispositif de fermeture (60), la pompe ne peut fonctionner et les moyens d'alerte sont activés.

8. Système (10) selon l'une quelconque des trois revendications précédentes, comprenant une pompe permettant d'alimenter en fluide la chambre (7), la pompe étant alimentée en électricité par un circuit électrique muni d'un premier interrupteur et d'un deuxième interrupteur, dans lequel le premier interrupteur est agencé pour se fermer sous la commande d'un utilisateur.

9. Système (10) selon la revendication précédente dans lequel les moyens d'asservissement (80) font office de deuxième interrupteur et sont configurés de sorte que le deuxième interrupteur se ferme lorsque le dispositif de fermeture (60) est disposé dans la deuxième position.

10. Système (10) selon la revendication précédente dans lequel les moyens d'asservissement (80) comportent un contacteur (81) de fin de course solidaire d'un bâti (20) du système, ainsi qu'un doigt de contact (68) porté par le dispositif de fermeture (60) et agencé de manière à coopérer avec le contacteur (81), les moyens d'asservissement (80) étant agencés de manière à ce que le contacteur (81) et le doigt de contact (68) soient en contact mutuel lorsque le dispositif de fermeture (60) est disposé dans la deuxième position et de manière à ce que dans cette position le doigt de contact (68) appuie sur le contacteur (81) et permet de fermer le circuit électrique d'alimentation de la pompe, le système étant en outre agencé de sorte que lorsque le contacteur (81) n'est pas poussé par le doigt de contact (68) la pompe ne peut fonctionner.

11. Système (10) selon la revendication précédente configuré de sorte que les moyens d'alerte sont alimentés en électricité lorsque le premier interrupteur est fermé et que la position relative du contacteur (81) et du doigt de contact (68) ne permet pas l'alimentation de la pompe.

12. Système (10) selon l'une quelconque des deux revendications précédentes dans lequel le deuxième interrupteur admet deux positions :
- une position dite de fonctionnement dans laquelle il permet de fermer le circuit de commande de la pompe,
- une position dite de non fonctionnement, dans laquelle il permet de fermer un circuit alimentant en électricité les moyens d'alerte.

13. Système (10) selon l'une quelconque des revendications précédentes, **caractérisé en ce qu'**il comprend une trappe (30) définissant une ouverture disposée en amont des moyens de fermeture amont (61) et **en ce que** le dispositif de fermeture (60) comprend des moyens d'obstruction (63) agencés de manière à:
• laisser libre l'ouverture de la trappe (30) lorsque le dispositif de fermeture (60) est disposé dans la première position et à,
• obstruer l'ouverture de la trappe (30) lorsque le dispositif de fermeture (60) est disposé dans la deuxième position.

14. Machine de production de boisson par infusion d'un produit contenu dans un conditionnement (1) comprenant un système (10) selon l'une quelconque des revendications 1 à 13.

15. Procédé de production de boisson par infusion d'un produit contenu dans un conditionnement (1) en utilisant un système (10) selon l'une quelconque des revendications 1 à 13, ou en utilisant une machine selon la revendication 14.

## Claims

1. System (10) for producing beverages by the infusion of a product contained in a package (1) and comprising:
• a chamber (7) for receiving an infusion package (1),
o chamber (7) comprising two half chambers (22, 42) arranged to be mutually apart or in contact so as to open or close chamber (7) respectively
• a closure device (60) comprising:
o upstream closure means (61) arranged to prevent or allow the insertion of package (1) into chamber (7),
o downstream closure means (62) arranged to prevent or allow the release of a package (1) out of chamber (7),
• closure device (60) being arranged to pass alternately between:
o a first position in which:
- upstream closure means (61) prevent a package (1) entering chamber (7),
- downstream closure means (62) allow release of a package (1) from chamber (7),
o a second position in which:
- upstream closure means (61) allow a package (1) to enter chamber(7),
- downstream closure means (62) allow a package (1) to be introduced into chamber (7) and prevent its release from chamber(7),
closure device (60) being arranged so that:
- the position of upstream closure means (61) conditions the position of downstream closure means (62)
- the position of downstream closure means (62) conditions the position of upstream closure means (61),
**characterized in that** it is equipped with warning means arranged to send a signal to a user to warn him/her if closure device (60) is not properly positioned.

2. System (10) according to claim 1 **characterized in that** upstream closure means (61) are joined to downstream closure means (62).

3. System (10) according to any one of the preceding claims, **characterized in that** closure device (60) is arranged so as to translate or rotate relative to frame (20) of system (10) in order to pass alternately between the first and second position.

4. System (10) according to any one of the preceding claims, wherein the warning means are configured to trigger a visual or sound warning signal when supplied.

5. System (10) according to any one of the preceding claims, **characterized in that** it is equipped with a pump for supplying a liquid to chamber (7), and/or an actuator for moving mutually the two half chambers (22, 42) and servo means (80) arranged so as to control the operation of the pump and/or the operation of the actuator depending on the position of closure device (60).

6. System (10) according to the preceding claim, wherein servo means (80) are configured to prevent the operation of the pump when an obstacle present in the lower part of system (10) prevents correct positioning of closure device (60).

7. System (10) according to the preceding claim with a receptacle for recovering packaging (1) already infused and arranged so that when the receptacle is full and a package (1) already infused cannot be evacuated properly and prevents correct operation of closure device (60), the pump is prevented from operating and the alert means are activated.

8. System (10) according to any one of the three preceding claims, comprising a pump for supplying liquid to chamber (7), the pump being supplied with electricity by an electrical circuit provided with a first and a second switch, in which the first switch is arranged so as to close under the control of a user.

9. System (10) according to the preceding claim wherein servo means (80) act as a second switch and are configured so that the second switch closes when closure device (60) is arranged in the second position.

10. System (10) according to the preceding claim wherein servo means (80) include an end-of-travel contact (81) joined to a frame (20) of the system, and a contact finger (68) on closure device (60) arranged to cooperate with contact (81), servo means (80) being arranged so that contact (81) and contact finger (68) are mutually in contact when closure device (60) is in the second position and so that in this position contact finger (68) presses on contact (81) and closes the pump electrical supply circuit, the system also being arranged so that when contact (81) is not pushed by contact finger (68), the pump cannot operate.

11. System (10) according to the preceding claim configured so that the warning means are supplied with electricity when the first switch is closed and the relative position of contact (81) and contact finger (68) does not allow the pump to be supplied.

12. System (10) according to any one of the two preceding claims wherein the second switch has two positions:
- a so-called operation position which enables closure of the pump control circuit,
- a so-called non-operation position, which allows a circuit supplying electricity to the warning means to be closed.

13. System (10) according to any one of the preceding claims,
**characterized in that** it is equipped with a hatch (30) defining an opening arranged upstream of upstream closure means (61) and **in that** closure device (60) is equipped with obstruction means (63) arranged so as to:
• leave the hatch (30) opening free when closure device (60) is arranged in the first position and,
• obstruct the opening of hatch (30) when closure device (60) is in the second position.

14. Machine for making beverages by infusion of a product contained in a package (1) equipped with a system (10) according to any one of claims 1 to 13.

15. A process for producing a beverage by infusion of a product contained in a package (1) using a system (10) according to any one of claims 1 to 13, or using a machine according to claim 14.

## Patentansprüche

1. System (10) zur Herstellung von Brühgetränken aus einem in einer Verpackung (1) enthaltenen Produkt, bestehend aus:
• einer Brühkammer (7) zur Aufnahme einer Verpackung (1),
o wobei die Kammer (7) aus zwei Teilkammern (22, 42) besteht, die zum Öffnen oder Schließen der Kammer (7) voneinander entfernt oder einander angenähert werden können,
• einer Schließeinrichtung (60) mit:
o vorgeschalteten Schließvorrichtungen (61), die so gestaltet sind, dass sie nach Wahl die Zuführung einer Verpackung (1) in die Kammer (7) sperren oder freigeben,
o nachgeschalteten Schließvorrichtungen (62), die so gestaltet sind, dass sie nach Wahl den Auswurf einer Verpackung (1) aus der Kammer (7) sperren oder freigeben,
• wobei die Schließvorrichtung (60) so gestaltet ist, dass sie abwechselnd:
o aus einer ersten Stellung, in welcher
- die vorgeschalteten Schließvorrichtungen (61) die Zuführung einer Verpackung (1) in die Kammer (7) sperren,
- die nachgeschalteten Schließvorrichtungen (62) den Auswurf einer Verpackung (1) aus der Kammer (7) freigeben,
o in eine zweite Stellung wechselt, in welcher
- die vorgeschalteten Schließvorrichtungen (61) die Zuführung einer Verpackung (1) in die Kammer (7) freigeben,
- die nachgeschalteten Schließvorrichtungen (62) die Aufnahme einer zugeführten Verpackung (1) in der Kammer (7) zulassen und deren Auswurf aus der Kammer (7) sperren,
- wobei die Schließvorrichtung (60) so gestaltet ist, dass
- die Stellung der vorgeschalteten Schließvorrichtungen (61) die Stellung der nachgeschalteten Schließvorrichtungen (62) bedingt,
- die Stellung der nachgeschalteten Schließvorrichtungen (62) die Stellung der vorgeschalteten Schließvorrichtungen (61) bedingt,
- **gekennzeichnet dadurch, dass** es Warnvorrichtungen besitzt, die so gestaltet sind, dass ein Warnsignal an eine Bedienperson gesandt wird, wenn die Schließeinrichtung (60) nicht in der richtigen Stellung ist.

2. System (10) gemäß Patentanspruch 1, **gekennzeichnet dadurch, dass** die vorgeschalteten Schließvorrichtungen (61) mit den nachgeschalteten Schließvorrichtungen (62) fest verbunden sind.

3. System (10) gemäß einem der vorstehenden Patentansprüche, **gekennzeichnet dadurch, dass** die Schließeinrichtung (60) so gestaltet ist, dass sie in Bezug auf ein Gestell (20) des Systems (10) abwechselnd zwischen der ersten und der zweiten Stellung eine Translations- oder eine Rotationsbewegung ausführt.

4. System (10) gemäß einem der vorstehenden Patentansprüche, bei dem die Warnvorrichtungen so gestaltet sind, dass sie ein sichtbares oder hörbares Warnsignal ausgeben, wenn sie mit Energie versorgt sind.

5. System (10) gemäß einem der vorstehenden Patentansprüche, **gekennzeichnet dadurch, dass** es eine Pumpe besitzt, um die Kammer (7) mit einem Fluid zu versorgen, und/oder ein Betätigungselement, mit dem die beiden Teilkammern (22, 42) gemeinsam bewegt werden, sowie Nachführungseinrichtungen (80), die so gestaltet sind, dass die Pumpe und/oder das Betätigungselement der Stellung der Schließeinrichtung (60) nachgeführt werden.

6. System (10) gemäß einem der vorstehenden Patentansprüche, bei dem die Warnvorrichtungen (80) so gestaltet sind, dass sie den Betrieb der Pumpe verhindern, wenn im unteren Teil des Systems (10) ein Hindernis vorhanden ist, das die richtige Positionierung des Schließeinrichtung (60) verhindert.

7. System (10) gemäß einem der vorstehenden Patentansprüche mit einem Auffangbehälter für die bereits gebrühten Verpackungen (1), der so gestaltet ist, dass der Auffangbehälter, wenn er voll ist, und eine bereits gebrühte Verpackung (1) nicht richtig abgeführt werden kann und die einwandfreie Funktion der Schließeinrichtung verhindert, die Pumpe nicht arbeiten kann und die Warnvorrichtungen aktiviert werden.

8. System (10), gemäß einem der drei vorstehenden Patentansprüche, mit einer Pumpe zur Versorgung der Kammer (7) mit einem Fluid, wobei die Pumpe von einer elektrischen Schaltung mit Strom versorgt wird, die einen ersten Schalter und einen zweiten Schalter besitzt, und bei welcher der erste Schalter so gestaltet ist, dass er durch Betätigung des Benutzers geschlossen wird.

9. System (10) gemäß einem der vorstehenden Patentansprüche, bei dem die Nachführungseinrichtungen (80) als zweiter Schalter dienen und so gestaltet sind, dass der zweite Schalter schließt, wenn die Schließeinrichtung (60) in der zweiten Stellung ist.

10. System (10) gemäß vorstehendem Patentanspruch, bei dem die Nachführungseinrichtungen (80) einen Endlagenschalter (81) besitzen, der mit dem Gestell des Systems fest verbunden ist, sowie einen auf der Schließeinrichtung (60) angeordneten Kontaktstift (68), der so gestaltet ist, dass er mit dem Schalter (81) zusammenwirken kann, bei dem die Nachführungseinrichtungen (80) derart angeordnet sind, dass der Schalter (81) und der Kontaktstift (68) einander berühren, wenn die Schließeinrichtung (60) in der zweiten Stellung ist und dass der Kontaktstift (68) in dieser Stellung auf den Schalter (81) drückt und die Stromversorgungsleitung der Pumpe schließen kann, wobei das System außerdem so gestaltet ist, dass die Pumpe nicht arbeiten kann, wenn der Schalter (81) von dem Kontaktstift (68) nicht gedrückt wird.

11. System (10) gemäß vorstehendem Patentanspruch, das so konfiguriert ist, dass die Warnvorrichtungen mit Strom versorgt sind, wenn der erste Schalter geschlossen ist und die Stellung des Schalters (81) bezüglich der des Kontaktstifts (68) die Stromversorgung der Pumpe nicht ermöglicht.

12. System (10) gemäß einem der beiden vorstehenden Patentansprüche, bei dem der zweite Schalter zwei Stellungen hat:
• eine sogenannte Betriebsstellung, in der er die Steuerschaltung der Pumpe schließen kann,
• und eine sogenannte Außer-Betrieb-Stellung, in der er die Stromversorgungleitung der Warnvorrichtungen zu schließen ermöglicht.

13. System (10) gemäß einem der vorstehenden Patentansprüche, **gekennzeichnet dadurch, dass** sie eine Klappe (30) besitzt, mit der eine vor den vorgeschalteten Schließvorrichtungen (61) befindliche Öffnung definiert wird, und dass die Schließeinrichtung (60) Verschlussmittel (63) besitzt, die so gestaltet sind,
• dass die Öffnung der Klappe (30) frei ist, wenn die Schließeinrichtung (60) in der ersten Stellung ist und
• dass die Öffnung der Klappe (30) verschlossen ist, wenn die Schließeinrichtung (60) in der zweiten Stellung ist.

14. Maschine zur Herstellung von Brühgetränken aus einem in einer Verpackung (1) enthaltenen Produkt, bestehend aus einem System (10) gemäß einem der Patentansprüche 1 bis 13.

15. Herstellungsverfahren für Brühgetränke aus einem in einer Verpackung (1) enthaltenen Produkt, bestehend aus einem System (10) gemäß einem der Patentansprüche 1 bis 13 oder durch Verwendung einer Maschine gemäß Patentanspruch 14.
